# FASCICULE DE BREVET EUROPEEN

(11) **EP 1 504 178 B1**
(45) Date de publication et mention de la délivrance du brevet: **31.08.2016**
(21) Numéro de dépôt: 03752830.4
(22) Date de dépôt: 16.05.2003
(51) Int. Cl.: F02C 7/18, F01D 5/08

(54) **TURBOREACTEUR AVEC UN CARENAGE STATOR DANS UNE CAVITE INTERNE**
STRAHLTRIEBWERK MIT EINER STATORVERKEIDUNG IN EINEM INTERNEN HOHLRAUM
GAS TURBINE WITH STATOR SHROUD IN THE CAVITY BENEATH THE CHAMBER

(30) Priorité: 16.05.2002 FR 0206010
(43) Date de publication de la demande: 09.02.2005
(73) Titulaire: SNECMA, 75015 Paris (FR)
(72) Inventeur: COULON, Sylvie, F-77590 Bois le Roi (FR); HACAULT, Michel, F-91300 Massy (FR); TAILLANT, Jean-Claude, F-77000 Vaux le Penil (FR)
(74) Mandataire: Intès, Didier Gérard André
(86) Numéro de dépôt international: PCT/FR2003/001497
(87) Numéro de publication internationale: WO 2003/098020

(56) Documents cités:
- FR-A- 2 030 993
- GB-A- 2 084 654
- US-A- 4 416 111
- US-A- 4 852 355
- US-A- 4 920 741
- US-A- 5 003 773
- US-A- 5 586 860

## Description

L'invention concerne la ventilation d'un rotor de turbine à haute pression.

Elle concerne plus précisément une turbomachine ayant un axe X et comportant, d'amont en aval, un compresseur à haute pression dont le rotor présente un cône aval, un diffuseur prolongé en aval du côté de l'axe X par un carter interne disposé radialement à l'extérieur dudit cône aval de compresseur, une chambre de combustion disposée radialement à l'extérieur dudit carter interne de diffuseur, et une turbine à haute pression dont le rotor est relié au cône aval du compresseur par un fût de liaison, le carter interne de diffuseur et le cône aval de compresseur délimitant entre eux une cavité sous chambre située en aval d'un labyrinthe de décharge et dans laquelle circule, d'amont en aval, un air de refroidissement.

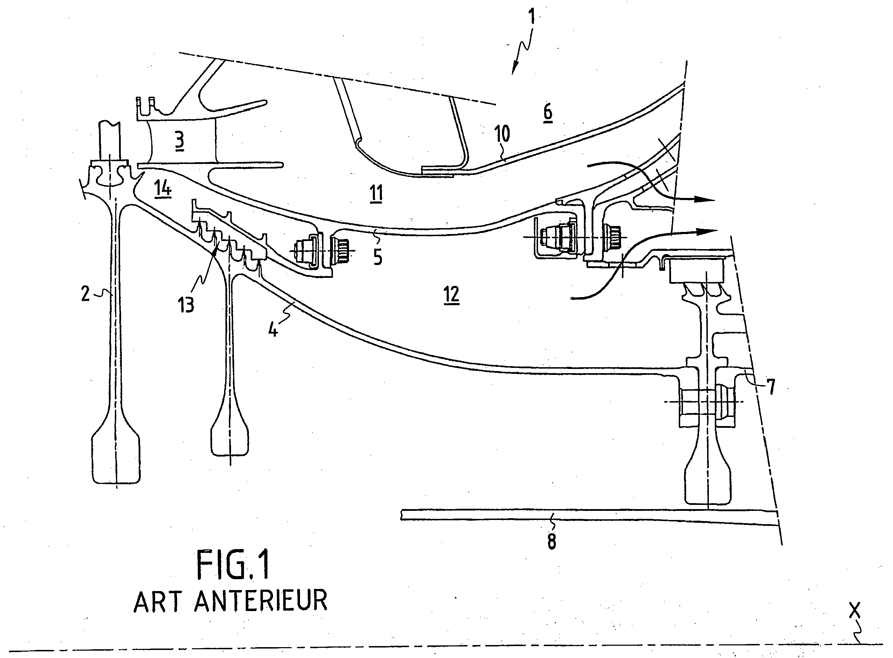

Une telle turbomachine 1 d'axe X est montrée sur la figure 1. La référence 2 désigne le disque du dernier étage du compresseur à haute pression, qui comporte à sa périphérie des aubes disposées devant l'entrée d'un diffuseur 3. Le rotor du compresseur se prolonge vers l'aval par un cône aval 4 disposé radialement à l'intérieur d'un carter interne 5 prolongeant la partie radialement intérieure du diffuseur 3. Une chambre de combustion 6 annulaire est montée autour du carter interne 5. La chambre de combustion 6 délivre des gaz chauds à un redresseur, non montré sur le dessin, disposé en amont du premier étage d'une turbine à haute pression dont le rotor est relié par un fût de liaison 7 au cône aval 4, afin d'entraîner en rotation le rotor du compresseur à haute pression. La référence 8 désigne l'arbre à basse pression qui relie une turbine à basse pression disposée en aval de la turbine à haute pression à un compresseur à basse pression disposé en amont de la turbine à haute pression et éventuellement à une soufflante dans le cas d'un turboréacteur.

Le carter interne 5 du diffuseur 3 définit avec la chemise interne 10 de la chambre de combustion un passage annulaire 11 pour l'écoulement du débit d'air délivré par le diffuseur 3 et qui est destiné à la combustion du carburant dans la zone primaire de la chambre de combustion et à la dilution des gaz de combustion dans la zone de dilution afin d'abaisser la température des gaz chauds délivrés à la turbine à haute pression. Une partie du débit d'air transitant par le passage annulaire 11 peut avantageusement servir au refroidissement des aubes de la turbine à haute pression.

Le carter interne 5 du diffuseur 3 et le cône aval 4 du compresseur à haute pression définissent entre eux une cavité annulaire 12 située radialement sous le carter interne 5 en aval d'un labyrinthe de décharge 13 monté sous le diffuseur 3 et destiné à assurer l'étanchéité entre le carter interne 5 et le cône aval 4 du rotor du compresseur à haute pression.

Un débit d'air de fuite pénètre dans la chambre 14 située en amont du labyrinthe de décharge 13 sous le diffuseur 3, par l'interstice séparant l'extrémité amont de la partie radialement intérieure du diffuseur 3 et l'extrémité aval de la périphérie du disque de compresseur 2. Ce débit d'air s'écoule dans la cavité annulaire 12 via le labyrinthe de décharge 13 et sert au refroidissement du cône aval 4 du rotor de compresseur, et des faces amont du rotor de turbine, notamment du flasque amont du disque de turbine, puis s'évacue dans la veine de gaz chauds par la cavité de purge située entre le redresseur et le rotor de turbine.

La cavité annulaire 12 présente une section radiale qui s'évase vers l'aval, et le débit d'air qui y circule diminue de vitesse d'amont en aval et est soumis à des échauffements importants, liés aux puissances générées par le frottement de l'air sur les parois du carter interne 5. Ces échauffements sont d'autant plus importants que les surfaces frottantes du stator sont importantes, et ils peuvent atteindre une valeur voisine de 100°C.

Le but de l'invention est de diminuer les puissances générées dans la cavité annulaire 12 afin de diminuer la température du débit d'air de refroidissement qui y circule.

L'invention atteint son but par le fait que la turbomachine comporte en outre un carénage stator implanté sous le carter interne de diffuseur en aval du labyrinthe de décharge.

Ainsi, les rayons du stator dans cette région sont fortement diminués, ce qui entraîne une diminution des surfaces frottantes du stator, et une diminution des puissances générées par le frottement.

Avantageusement, la section transversale de la cavité annulaire définie par le carénage stator et le cône aval est sensiblement constante de l'amont vers l'aval.

Cette disposition permet une vitesse sensiblement uniforme du débit d'air dans cette cavité annulaire, et diminue le temps de transfert du débit d'air dans cette zone.

En outre, le carénage stator et le carter interne du diffuseur délimitent entre eux une chambre annulaire qui sépare le passage annulaire situé autour du carter interne du diffuseur, de la cavité annulaire. La température dans cette chambre annulaire est sensiblement égale à la moitié de la température des deux débits d'air, ce qui permet de diminuer les échanges thermiques entre les deux débits d'air.

D'autres caractéristiques et avantages de l'invention ressortiront à la lecture de la description suivante faite à titre d'exemple et en référence aux dessins annexés dans lesquels :
- la figure 1 est une demi-coupe de la partie située sous la chambre de combustion d'une turbomachine, selon l'état de la technique ; et
- la figure 2 est une demi-coupe de la partie située sous la chambre de combustion d'une turbomachine selon l'invention.

L'état de la technique montré sur la figure 1 a été discuté dans l'introduction et ne nécessite pas d'autres explications.

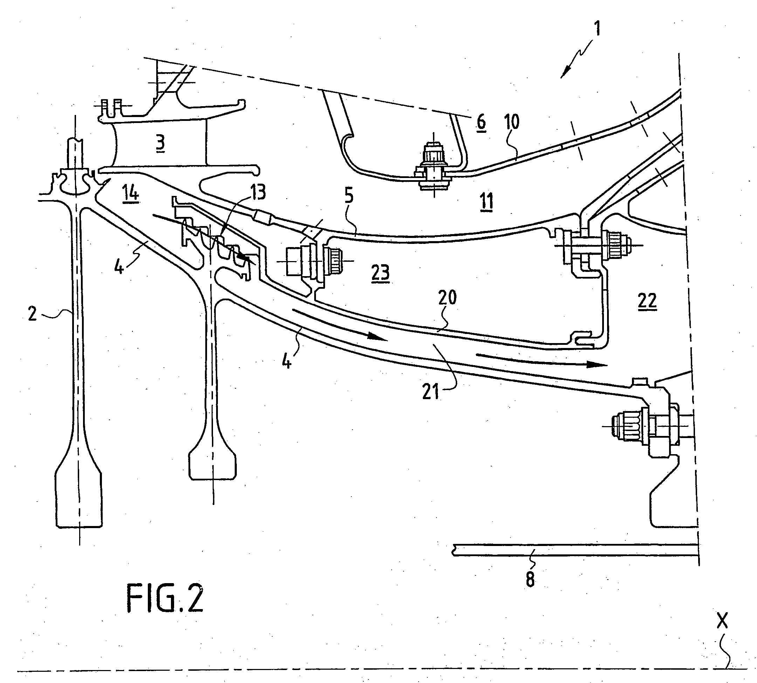

La figure 2 montre la partie d'une turbomachine selon l'invention, située radialement à l'intérieur de la chambre de combustion 6 en aval du dernier étage d'un compresseur à haute pression.

Comme dans l'état de la technique, le disque 2 du compresseur est prolongé vers l'aval par un cône aval 4 relié au fût de liaison du rotor de la turbine à haute pression. Le diffuseur 3 comporte également un carter interne 5 de forme évasée vers l'aval disposé à l'intérieur de la chemise 10 radialement intérieure de la chambre de combustion 6 et définissant avec cette dernière un passage 11 dans lequel s'écoule le flux d'air délivré par le diffuseur 3. Un labyrinthe de décharge 13 est prévu sous le diffuseur 3 entre le carter interne 5 et le cône aval 4.

Selon l'invention, un carénage stator 20 est implanté sous le carter interne 5 en aval du labyrinthe de décharge 13. Ce carénage 20 et le cône aval 4 délimitent, en aval du labyrinthe de décharge 13, un passage annulaire conique 21, dont l'épaisseur radiale ou la section transversale est sensiblement constante sur toute la longueur du carénage 20.

Ce passage annulaire conique 21 dont le rayon diminue de l'amont vers l'aval permet l'écoulement du débit de fuite qui traverse le labyrinthe de décharge 13 vers une enceinte 22 située en aval du carénage 20, afin d'assurer le refroidissement des faces amont du rotor de turbine. _

Le carénage 20 et le carter interne 5 du diffuseur 3 délimitant une chambre 23 qui isole thermiquement le flux d'air principal circulant dans le passage 11 et le débit de fuite circulant dans le passage annulaire conique 21. L'air contenu dans cette chambre 23 est à une température intermédiaire entre celle du flux d'air principal et celle du débit de fuite.

L'implantation du carénage stator 20 sous le carter interne 5 du diffuseur 3 permet de diminuer de façon notable les surfaces frottantes du stator et de ce fait de diminuer les puissances générées dans le passage annulaire 21.

Pour un même débit de fuite à travers le labyrinthe de décharge 13, la température de l'air à l'entrée de la chambre 22 est diminuée d'une valeur qui peut atteindre 26°C.

Si inversement, on diminue le débit de fuite à travers le labyrinthe de décharge 13, afin que la température de l'air dans la chambre 22 soit égale à la température à cet endroit en l'absence du carénage 20, le gain de consommation spécifique de carburant peut être estimé à 0,1 % environ.

## Revendications

1. Turbomachine ayant un axe X et comportant, d'amont en aval, un compresseur à haute pression dont le rotor présente un cône aval (4), un diffuseur (3) prolongé en aval du côté de l'axe X par un carter interne (5) disposé radialement à l'extérieur dudit cône aval de compresseur, une chambre de combustion disposée radialement à l'extérieur dudit carter interne de diffuseur, et une turbine à haute pression dont le rotor est relié au cône aval du compresseur par un fût de liaison, le carter interne de diffuseur et le cône aval de compresseur délimitant entre eux une cavité sous chambre située en aval d'un labyrinthe de décharge (13) et dans laquelle circule, d'amont en aval, un air de refroidissement, **caractérisée par le fait qu'**elle comporte en outre un carénage stator (20) implanté sous le carter interne (5) de diffuseur en: aval du labyrinthe de décharge (13) et définissant avec ledit carter interne une chambre (23) qui isole thermiquement le flux d'air circulant autour de ladite chambre de combustion du flux d'air de refroidissement circulant dans la cavité annulaire (21) définie par le carénage stator (20) et ledit cône aval (4).

2. Turbomachine selon la revendication 1, **caractérisée par le fait que** la section transversale de la cavité annulaire (21) définie par le carénage stator (20) et le cône aval (4) est sensiblement constante de l'amont vers l'aval.

## Patentansprüche

1. Turbomaschine mit einer Achse X und umfassend von stromaufwärts nach stromabwärts einen Hochdruckkompressor, dessen Rotor einen stromabwärtigen Kegel (4), einen Diffusor (3), der stromabwärts auf der Seite der Achse X durch ein inneres Gehäuse (5) verlängert ist, das radial außerhalb des stromabwärtigen Kompressorkegels angeordnet ist, eine Brennkammer, die radial außerhalb des inneren Gehäuses des Diffusors angeordnet ist, und eine Hochdruckturbine umfasst, deren Rotor mit dem stromabwärtigen Kompressor durch einen Verbindungsschaft verbunden ist, wobei das innere Gehäuse des Diffusors und der stromabwärtige Kegel des Kompressors zwischen sich einen Hohlraum unter der Kammer begrenzen, der sich stromabwärts zu einem Entladelabyrinth (13) befindet, und in dem von stromaufwärts nach stromabwärts Kühlluft zirkuliert, **dadurch gekennzeichnet, dass** sie ferner eine Statorverkleidung (20) umfasst, die unter dem inneren Gehäuse (5) des Diffusors stromabwärts zum Entladelabyrinth (13) angeordnet ist und mit dem inneren Gehäuse eine Kammer (23) definiert, die den um die Brennkammer zirkulierenden Luftstrom thermisch von dem Kühlluftstrom isoliert, der in dem ringförmigen Hohlraum (21) zirkuliert, der durch die Statorverkleidung (20) und den stromabwärtigen Kegel (4) definiert ist.

2. Turbomaschine nach Anspruch 1, **dadurch gekennzeichnet, dass** der Querschnitt des ringförmigen Hohlraums (21), der durch die Statorverkleidung (20) und den stromabwärtigen Kegel (4) definiert ist, im Wesentlichen von stromaufwärts nach stromabwärts konstant ist.

## Claims

1. A turbomachine having an axis X comprising, from upstream to downstream, a high pressure compressor whose rotor presents a downstream cone (4), a diffuser (3) extending downstream beside the axis X by an inner casing (5) disposed radially outside said downstream compressor cone, a combustion chamber disposed radially outside said inner diffuser casing, and a high pressure turbine whose rotor is connected to the downstream compressor cone by a connection drum, the inner diffuser casing and the downstream compressor cone defining between them an under-chamber cavity that is situated downstream from a discharge labyrinth (13) and in which cooling air flows, from upstream to downstream, the turbomachine being **characterized by** the fact that it further comprises a stator shroud (20) that is installed under the inner diffuser casing (5) downstream from the discharge labyrinth (13) and defining with said inner casing a chamber (23) which thermally insulates the air flow around said combustion chamber from the cooling air flow in the annular cavity (21) as defined by the stator shroud (20) and said downstream cone (4).

2. A turbomachine according to claim 1, **characterized by** the fact that the cross section of the annular cavity (21) defined by the stator shroud (20) and the downstream cone (4) is substantially constant from upstream to downstream.
